# EUROPEAN PATENT APPLICATION

(11) **EP 4 411 498 A1**
(43) Date of publication of application: **07.08.2024**
(21) Application number: 23220639.1
(22) Date of filing: 28.12.2023
(51) Int. Cl.: G05B 23/02

(54) **METHOD, PROGRAM, AND DEVICE FOR CONFIGURING AN ABNORMALITY DETERMINATION SYSTEM**

(30) Priority: 31.01.2023 JP 2023013059
(71) Applicant: OMRON Corporation, Kyoto 600-8530 (JP)
(72) Inventor: TSUKUDA, Koki, Kyoto-Shi, 600-8530 (JP); YANO, Keisuke, Kyoto-Shi, 600-8530 (JP)
(74) Representative: HGF

(57) **Abstract**

A method includes performing scoring each of data of a plurality of types of feature amounts acquired respectively from a monitoring target at a normal time and an abnormal time by scoring a divergence degree of a same type data at a normal time and an abnormal time in each of data of the plurality of types of feature amounts, and recommending a feature amount whose assigned score satisfies a predetermined condition in the plurality of types of feature amounts as a feature amount used for abnormality determination of the monitoring target.

## Description

### BACKGROUND

### TECHNICAL FIELD

The present disclosure relates to a method, a program, and a device.

### BACKGROUND ART

Patent Literature 1 discloses a facility control device including a first selection means that selects one event as a trigger according to an input from among a plurality of types of operation information.

### CITATION LIST

### PATENT LITERATURE

Patent Literature 1: JP 2014-142714 A

### SUMMARY

In the invention of Patent Literature 1, in order to select operation information suitable for determining an abnormality of a facility that is a monitoring target from among data of a plurality of types of feature amounts, knowledge of the facility and knowledge of the abnormality to occur may be required.

An object of the present disclosure is to provide a method, a program, and a device capable of recommending a feature amount suitable for abnormality determination of a monitoring target from among a plurality of types of feature amounts.

A method according to an aspect of the present disclosure includes:
performing scoring each of data of a plurality of types of feature amounts acquired respectively from a monitoring target at a normal time and an abnormal time by scoring a divergence degree of a same type data at a normal time and an abnormal time in data of the plurality of types of feature amounts; and
recommending a feature amount whose assigned score satisfies a predetermined condition in the plurality of types of feature amounts as a feature amount used for abnormality determination of the monitoring target.

A program according to an aspect of the present disclosure causes a computer to execute a method including:
performing scoring each of data of a plurality of types of feature amounts acquired respectively from a monitoring target at a normal time and an abnormal time by scoring a divergence degree of a same type data at a normal time and an abnormal time in data of the plurality of types of feature amounts; and
recommending a feature amount whose assigned score satisfies a predetermined condition in the plurality of types of feature amounts as a feature amount used for abnormality determination of the monitoring target.

A device according to an aspect of the present disclosure includes:
an acquisition unit configured to acquire data of a plurality of types of feature amounts of a monitoring target at a normal time and an abnormal time;
a scoring unit configured to perform scoring each of data of a plurality of types of feature amounts acquired respectively from the monitoring target at a normal time and an abnormal time by scoring a divergence degree of a same data at a normal time and an abnormal time in data of the plurality of types of feature amounts; and
a recommendation unit configured to recommend a feature amount whose assigned score satisfies a predetermined condition in the plurality of types of feature amounts as a feature amount used for abnormality determination of the monitoring target.

According to the present disclosure, it is possible to implement a method, a program, and a device capable of recommending a feature amount suitable for abnormality determination of a monitoring target from among a plurality of types of feature amounts.

### BRIEF DESCRIPTION OF DRAWINGS

Fig. 1 is a block diagram showing a device according to an aspect of the present disclosure.
Fig. 2 is a first diagram for illustrating the scoring of a divergence degree between a normal time and an abnormal time.
Fig. 3 is a second diagram for illustrating the scoring of a divergence degree between a normal time and an abnormal time.
Fig. 4 is a third diagram for illustrating the scoring of a divergence degree between a normal time and an abnormal time.
Fig. 5 is a diagram showing an example of a display mode of a recommended feature amount.
Fig. 6 is a diagram showing an example of a display mode of a recommended threshold value.
Fig. 7 is a flowchart for illustrating an example of the method of the present disclosure.

### DETAILED DESCRIPTION

Hereinafter, an example of the present disclosure will be described with reference to the accompanying drawings. In addition, the following description is, essentially, merely illustrative and is not intended to limit the present disclosure, applied products of the present disclosure, and applications of the present disclosure. The accompanying drawings are schematic, and ratios and the like of the respective dimensions do not necessarily match those of actual ones.

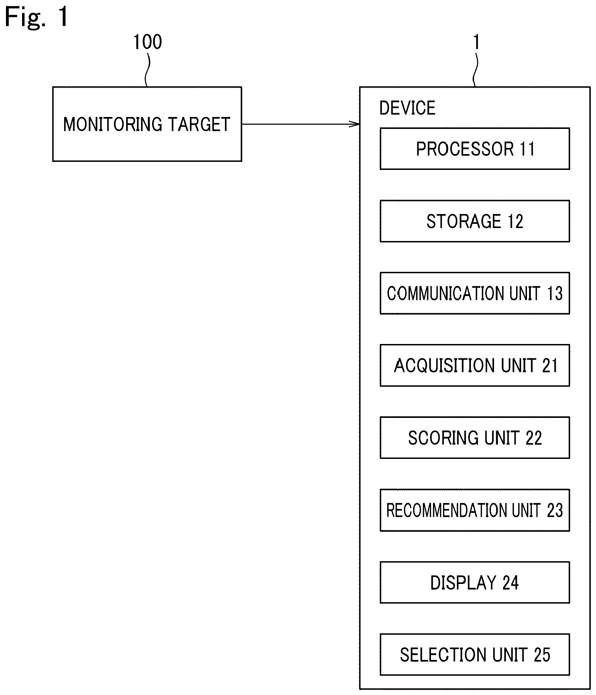

A device 1 according to an aspect of the present disclosure is applied to a device that monitors a monitoring target 100 (for example, a production facility of a factory), and is configured to be able to recommend a feature amount used for abnormality determination of a production facility that is a monitoring target. As shown in Fig. 1, the device 1 includes a processor 11, a storage 12, a communication unit 13, an acquisition unit 21, a scoring unit 22, and a recommendation unit 23.

The processor 11 includes a CPU, an MPU, a GPU, a DSP, an FPGA, an ASIC, and the like. The storage 12 includes, for example, an internal recording medium or an external recording medium. The internal recording medium includes a nonvolatile memory and the like. The external recording medium includes a hard disk (HDD), a solid-state drive (SSD), an optical disc device, and the like. The communication unit 13 includes, for example, a communication circuit or a communication module for transmitting and receiving data to and from an external device such as a server and a sensor.

The acquisition unit 21, the scoring unit 22, and the recommendation unit 23 are implemented, for example, by the processor 11 executing a predetermined program stored in the storage 12.

The acquisition unit 21 is configured to be able to acquire data of a plurality of types of feature amounts of the monitoring target at a normal time and an abnormal time. Data of a feature amount of the monitoring target is detected by a sensor at every predetermined sampling time, input to the device 1 through the communication unit 13, and stored in the storage 12, for example. In this case, the acquisition unit 21 acquires data of the plurality of types of feature amounts of the monitoring target from the storage 12. The feature amount includes, for example, a frequency, an active power, or a current RMS value.

The "monitoring target at a normal time" is, for example, a monitoring target in a state in which scheduled performance, functions, and the like can be exerted. An example of the "monitoring target at a normal time" will be described next.
- a monitoring target immediately after maintenance
- a brand-new monitoring target
- a monitoring target immediately after replacing a component (for example, a drill)

The "monitoring target at an abnormal time" is, for example, a monitoring target in a state in which scheduled performance, functions, and the like cannot be exerted. An example of the "monitoring target at an abnormal time" will be described next.
- a monitoring target immediately before maintenance (for example, maintenance for solving a trouble that has occurred)
- a monitoring target having been operated for a long period (for example, beyond useful life)
- a monitoring target immediately before replacing a component (for example, a worn drill) used for a long period

The scoring unit 22 is configured to be able to perform scoring each of the acquired data of the plurality of types of feature amounts by scoring a divergence degree of a same type data at the normal time and the abnormal time in the acquired data of the plurality of types of feature amounts (hereinafter, referred to as a divergence degree between a normal time and an abnormal time). In the present aspect, the scoring unit 22 makes each of the acquired data of the plurality of types of feature amounts into a histogram based on a frequency distribution of a magnitude of value of each of the plurality of types of feature amounts, and scores the divergence degree between the normal time and the abnormal time based on the acquired data of the plurality of types of feature amounts each made into the histogram. The making into the histogram is performed every time data of one type of a feature amount is acquired.

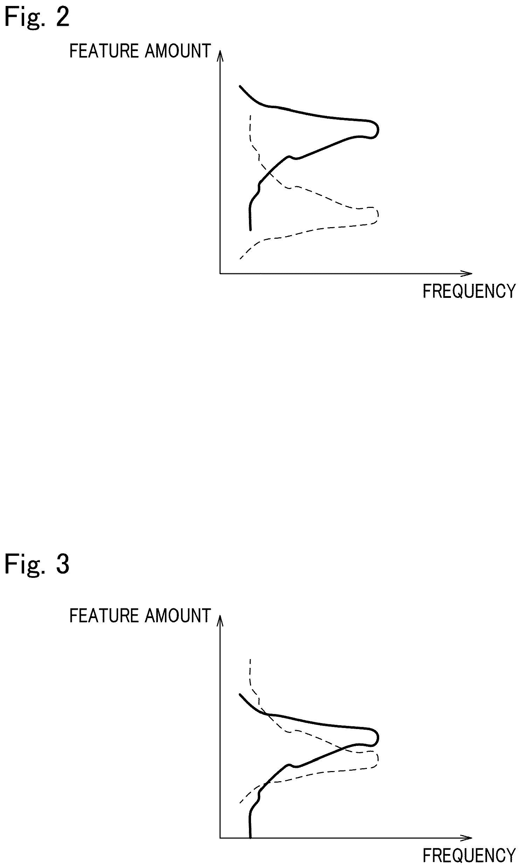

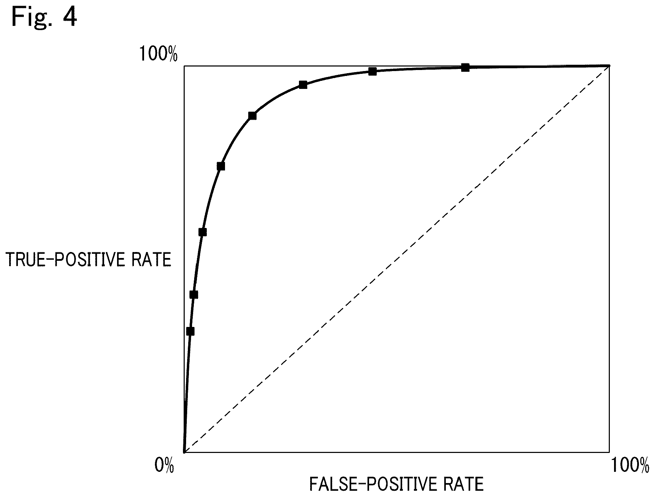

An example of scoring the divergence degree between the normal time and the abnormal time will be described below.
- The maximum value of data of the feature amounts at an abnormal time is defined as an abnormal maximum value, and the maximum value of data of the feature amounts at a normal time is defined as a normal maximum value. A value obtained by dividing a difference obtained by subtracting the normal maximum value from the abnormal maximum value by the normal maximum value (increase rate of the maximum value) is calculated as a score representing the divergence degree between the normal time and the abnormal time (that is, score = [abnormal maximum value - normal maximum value]/normal maximum value).
- Data of the feature amounts at the normal time and the abnormal time are statistically tested to calculate a test value. For the test, for example, Welch's t-test is used. The calculated test value is calculated as a score representing the divergence degree between the normal time and the abnormal time. It is determined that the larger a difference between the test values at the normal time and the abnormal time, the higher the divergence degree (that is, the score is high). As an example, a diagram having a high divergence degree between the normal time and the abnormal time is shown in Fig. 2, and a diagram having a low divergence degree between the normal time and the abnormal time is shown in Fig. 3. In Figs. 2 and 3, data of the feature amounts at the normal time is indicated by a dotted line, and data of the feature amounts at the abnormal time is indicated by a solid line.
- An ROC curve is drawn with data of the feature amounts at the normal time as positive and data of the feature amounts at the abnormal time as negative, and an area under the curve (AUC) value is calculated (see Fig. 4). The calculated AUC value is calculated as a score representing the divergence degree between the normal time and the abnormal time. It is determined that the larger the AUC value, the higher the divergence degree between the normal time and the abnormal time.

The recommendation unit 23 is configured to be able to recommend a feature amount whose assigned score satisfies a predetermined condition in the plurality of types of feature amounts as a feature amount used for abnormality determination of a monitoring target. The feature amount is recommended in at least any one of a "type" and a "data" format, for example. The predetermined condition includes, for example, that the score is a predetermined value (for example, 95% of the maximum value of all calculated scores) or more. In the abnormality determination, for example, it is determined that the monitoring target is abnormal when predetermined data of a feature amount is equal to or more than a threshold value.

In the present aspect, the recommendation unit 23 is configured to be able to recommend a value between the abnormal maximum value and the normal maximum value as a threshold value for data of the recommended feature amount.

In the present aspect, the device 1 includes a display 24 and a selection unit 25. The display 24 includes, for example, a display device, and is configured to be able to display a plurality of recommended feature amounts. The display 24 may be configured to present to a user in order from a feature amount whose assigned score is higher among a plurality of types of the recommended feature amounts. The selection unit 25 is configured to be able to select one feature amount from the plurality of types of feature amounts displayed on the display 24. The selection unit 25 is implemented, for example, by the processor 11 executing a predetermined program stored in the storage 12. Selection of the one feature amount by a user is performed, for example, through an input device of a mouse, a keyboard, or a smartphone.

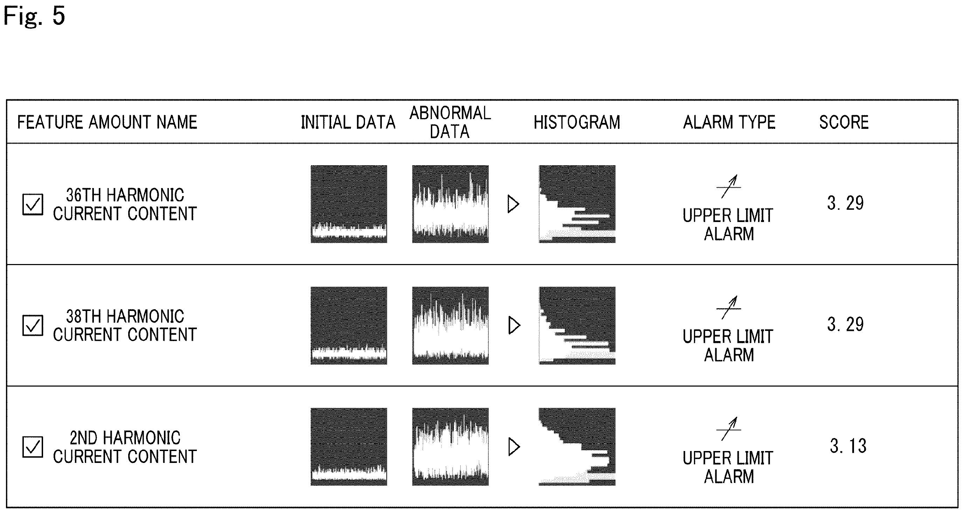

An example of a display aspect of the recommended feature amounts is shown in Fig. 5. In Fig. 5, types of the recommended feature amounts are indicated by "feature amount name", data of the feature amounts at the normal time is indicated by "initial data", and data of the feature amounts at the abnormal time is indicated by "abnormal data".

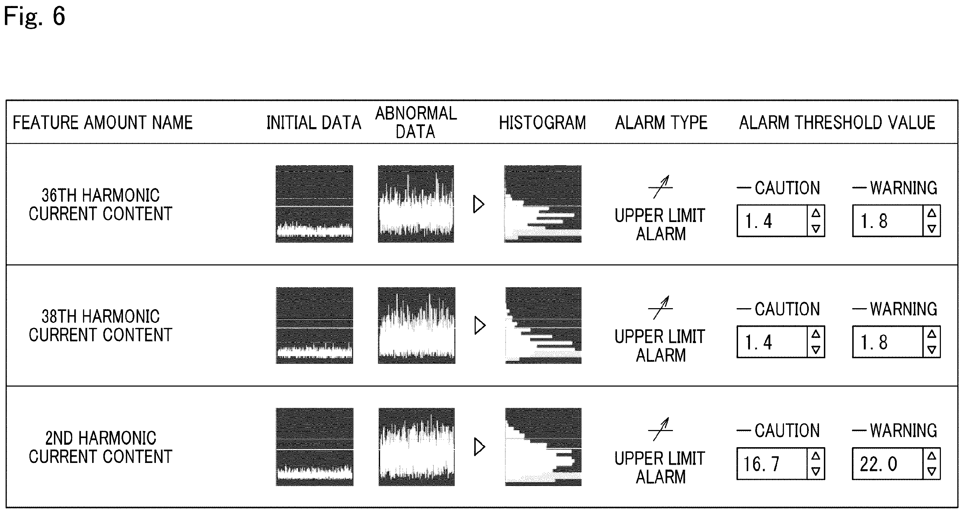

The display 24 is configured to be able to display a recommended threshold value. An example of a display aspect of the recommended threshold values is shown in Fig. 6. In Fig. 6, as in Fig. 5, types of the recommended feature amounts are indicated by "feature amount name", data of the feature amounts at the normal time is indicated by "initial data", and data of the feature amounts at the abnormal time is indicated by "abnormal data". In addition, as the recommended threshold values, "warning" and "caution" having a value smaller than that of "warning" are indicated for each of the data of the feature amounts. In the display aspect in Fig. 6, a user can finely adjust the recommended threshold value using up and down arrows positioned in the vicinity of a numerical value corresponding to each of the "warning" and the "caution" while viewing the data of the feature amounts at the normal time and the abnormal time, and can set the final threshold. Data of the selected feature amount and the threshold value set for the data of the selected feature amount are output to a device that monitors the monitoring target through the communication unit 13, for example.

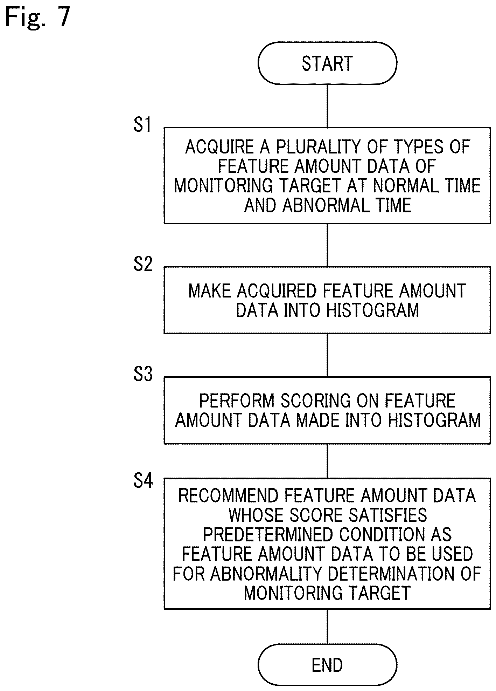

With reference to Fig. 7, an example of a method for recommending a feature amount used for abnormality determination of a monitoring target of the present disclosure will be described. As an example, the method shown in Fig. 7 is implemented by the processor 11 executing a predetermined program.

As shown in Fig. 7, when the method for recommending a feature amount used for abnormality determination of a monitoring target is started, the acquisition unit 21 acquires data of a plurality of types of feature amounts of the monitoring target at the normal time and the abnormal time (step S1). When data of the plurality of types of feature amounts is acquired, the device 1 makes each of the acquired data of the plurality of types of feature amounts into a histogram based on a frequency distribution of magnitudes of values of the feature amounts (step S2).

When data of the acquired feature amounts is made into the histogram, the scoring unit 22 scores each of data of the plurality of types of feature amounts made into the histogram (step S3). The scoring is performed by scoring a divergence degree between the normal time and the abnormal time.

When the scoring is performed on each of data of the plurality of types of feature amounts made into the histogram, the recommendation unit 23 recommends a feature amount whose score satisfies the predetermined condition as a feature amount to be used for abnormality determination of the monitoring target (step S4), and the method for recommending data of the feature amount to be used for abnormality determination of the monitoring target ends.

According to the method of the present disclosure, the following effects can be exerted.

Generally, a monitoring device capable of monitoring an abnormality of a monitoring target is configured to be able to detect various abnormalities of the monitoring target by monitoring a state of the monitoring target using properly a plurality of types of measurable parameters (that is, data of feature amounts). However, in order to select a parameter suitable for monitoring according to a monitoring target or an abnormality to be captured, domain knowledge such as electrical knowledge, knowledge of the monitoring target, and an abnormality occurrence mechanism may be required. In particular, the more parameters that can be acquired, the more difficult it is to select an appropriate parameter.

The method of the present disclosure includes the following configuration. With such a configuration, it is possible to recommend a feature amount suitable for abnormality determination of a monitoring target from among a plurality of types of feature amounts.
- Scoring is performed for each of data of a plurality of types of feature amounts acquired respectively from a monitoring target at a normal time and an abnormal time by scoring a divergence degree of a same type data at a normal time and an abnormal time in data of the plurality of types of feature amounts.
- As a feature amount used for abnormality determination of a monitoring target, a feature amount whose assigned score satisfies a predetermined condition in the plurality of types of feature amounts is recommended.

In the method of the present disclosure, any one or more of a plurality of configurations shown next can be optionally adopted. That is, any one or more of the plurality of configurations shown next can be optionally deleted when included in the above aspect, and can be optionally added when not included in the above aspect. By adopting such a configuration, it is possible to more reliably implement a method capable of recommending a feature amount suitable for abnormality determination of a monitoring target from among a plurality of types of feature amounts.

Each of t acquired data of the plurality of types of feature amounts is made into a histogram based on a frequency distribution of magnitudes of values of the plurality of types of feature amounts, and the scoring for each of data of a plurality of types of feature amounts acquired respectively from a monitoring target at a normal time and an abnormal time is performed on the divergence degree based on the acquired data of the plurality of types of feature amounts each made into the histogram.

A value obtained by dividing a difference obtained by subtracting the normal maximum value from the abnormal maximum value by the normal maximum value is calculated as a score of the divergence degree.

A value between the abnormal maximum value and the normal maximum value is recommended as a threshold value of abnormality determination.

Every time data of one type of a feature amount is acquired, the acquired data of one type of a feature amount is made into the histogram. With such a configuration, the storage 12 does not need to store all data of the plurality of types of feature amounts, and a volume of data stored in the storage 12 can be reduced.

The method of the present disclosure can be executed by a computer. The present disclosure includes a program for causing a computer to execute the method of the present disclosure and a computer-readable storage medium storing the program for causing a computer to execute the method of the present disclosure.

According to the device 1, the following effects can be exerted.

The device 1 includes an acquisition unit 21, a scoring unit 22, and a recommendation unit 23. The acquisition unit 21 is configured to be able to acquire data of a plurality of types of feature amounts of a monitoring target at a normal time and an abnormal time. The scoring unit 22 is configured to be able to perform scoring each of data of a plurality of types of feature amounts acquired respectively from the monitoring target at a normal time and an abnormal time by scoring a divergence degree of a same data at a normal time and an abnormal time in data of the plurality of types of feature amounts. The recommendation unit 23 is configured to be able to recommend a feature amount whose assigned score satisfies a predetermined condition in the plurality of types of feature amounts as a feature amount used for abnormality determination of the monitoring target. With such a configuration, it is possible to recommend a feature amount suitable for abnormality determination of the monitoring target from among a plurality of types of feature amounts.

The device 1 includes a display 24 configured to be able to display a plurality of recommended feature amounts, and a selection unit 25 configured to be able to select one feature amount from the plurality of types of feature amounts displayed on the display 24. With such a configuration, it is possible to implement a device 1 in which the recommended feature amount can be easily checked and easily selected.

The method and the device 1 of the present disclosure may be configured as follows.

The scoring of the divergence degree between the normal time and the abnormal time is not limited to a case where each of the acquired data of the plurality of types of feature amounts is made into the histogram, and may be performed by another method.

The recommendation unit 23 is not limited to a case where a processing of recommending the threshold value is executable, and may be configured that the processing of recommending the threshold value is not executable.

The making data of a feature amount into a histogram is not limited to a case of being performed by the device 1, and may be performed by an external device such as a server. In this case, the device 1 is configured to be able to acquire data of feature amount made into a histogram.

The making acquired data of a feature amount into a histogram is not limited to be performed every time data of one type of a feature amount is acquired, and may be performed when data of a plurality of types or all types of feature amounts is acquired.

The display 24 and the selection unit 25 may be omitted. In this case, the device 1 may be configured to output a recommended feature amount and/or a recommended threshold value to an external display device (for example, a monitor of a PC) through the communication unit 13. The device 1 and the external display device are connected by wired communication or wireless communication.

As described above, various aspects in the present disclosure have been described in detail with reference to the drawings. Lastly, various aspects of the present disclosure will be described. It should be noted that in the following description, as an example, reference numerals are also added.

A method according to a first aspect of the present disclosure includes:
performing scoring each of data of a plurality of types of feature amounts acquired respectively from a monitoring target at a normal time and an abnormal time by scoring a divergence degree of a same type data at a normal time and an abnormal time in data of the plurality of types of feature amounts, and
recommending a feature amount whose assigned score satisfies a predetermined condition in the plurality of types of feature amounts as a feature amount used for abnormality determination of the monitoring target.

A method according to a second aspect of the present disclosure is the method according to the first aspect, wherein each of acquired data of the plurality of types of feature amounts is made into a histogram based on a frequency distribution of magnitudes of values of the plurality of types of feature amounts, and scoring is performed on the divergence degree based on the acquired data of the plurality of types of feature amounts each made into the histogram.

A method according to a third aspect of the present disclosure is the method according to the second aspect, wherein when a maximum value of data of a feature amount at an abnormal time in the plurality of types of feature amounts is defined as an abnormal maximum value, and a maximum value of data of a feature amount at a normal time in the plurality of types of feature amounts is defined as a normal maximum value, a value obtained by dividing a difference between the abnormal maximum value and the normal maximum value by the normal maximum value is calculated as a score of the divergence degree.

A method according to a fourth aspect of the present disclosure is the method according to the third aspect, wherein when it is determined in the abnormality determination that the monitoring target is abnormal when data of a feature amount is equal to or more than a threshold value, a value between the abnormal maximum value and the normal maximum value is recommended as the threshold value.

A method according to a fifth aspect of the present disclosure is the method according to any one of the second to fourth aspects, wherein every time data of one type of a feature amount is acquired, the acquired data of one type of a feature amount is made into the histogram.

A program according to a sixth aspect of the present disclosure is configured to cause a computer to execute a method including:
performing scoring for each of data of a plurality of types of feature amounts acquired respectively from a monitoring target at a normal time and an abnormal time by scoring a divergence degree of a same data in data of the plurality of types of feature amounts at a normal time and an abnormal time, and
recommending a feature amount whose assigned score satisfies a predetermined condition in the plurality of types of feature amounts as a feature amount used for abnormality determination of the monitoring target.

A device 1 according to a seventh aspect of the present disclosure includes:
an acquisition unit 21 configured to acquire data of a plurality of types of feature amounts of a monitoring target at a normal time and an abnormal time,
a scoring unit 22 configured to perform scoring for each of data of a plurality of types of feature amounts acquired respectively from the monitoring target at a normal time and an abnormal time by scoring a divergence degree of a same data in data of the plurality of types of feature amounts at a normal time and an abnormal time, and
a recommendation unit 23 configured to recommend a feature amount whose assigned score satisfies a predetermined condition in the plurality of types of feature amounts as a feature amount used for abnormality determination of the monitoring target.

A device 1 according to an eighth aspect of the present disclosure is the device 1 according to the seventh aspect, further including:
a display 24 configured to display a plurality of recommended feature amounts, and
a selection unit 25 configured to select one feature amount from the plurality of types of feature amounts displayed on the display 24.

Appropriately combining any aspect or modification out of the various aspect s or modifications allows the effect of each of the aspect or modification to be exhibited. In addition, a combination of aspect s, a combination of examples, or a combination of an aspect and an example is possible, and a combination of features of different aspect s or examples is also possible.

The present disclosure has been sufficiently described in connection with the preferred aspect s with reference to the accompanying drawings, and various modifications and corrections are apparent for those skilled in the art. It should be understood that as long as such modifications and corrections do not depart from the scope of the present disclosure by the attached claims, they are included therein.

### INDUSTRIAL APPLICABILITY

The present disclosure can be applied to, for example, a device that monitors a production facility of a factory.

### Reference Signs List

- 1: device
- 11: processor
- 12: storage
- 13: communication unit
- 21: acquisition unit
- 22: scoring unit
- 23: recommendation unit
- 24: display
- 25: selection unit
- 100: monitoring target

## Claims

1. A method, **characterized by** comprising:
performing scoring each of data of a plurality of types of feature amounts acquired respectively from a monitoring target at a normal time and an abnormal time by scoring a divergence degree of a same type data at a normal time and an abnormal time in data of the plurality of types of feature amounts; and
recommending a feature amount whose assigned score satisfies a predetermined condition in the plurality of types of feature amounts as a feature amount used for abnormality determination of the monitoring target.

2. The method according to claim 1, wherein
each of acquired data of the plurality of types of feature amounts is made into a histogram based on a frequency distribution of magnitudes of values of the plurality of types of feature amounts, and scoring is performed on the divergence degree based on the acquired data of the plurality of types of feature amounts each made into the histogram.

3. The method according to claim 2, wherein
when a maximum value of data of a feature amount at an abnormal time in the plurality of types of feature amounts is defined as an abnormal maximum value, and a maximum value of data of a feature amount at a normal time in the plurality of types of feature amounts is defined as a normal maximum value, a value obtained by dividing a difference between the abnormal maximum value and the normal maximum value by the normal maximum value is calculated as a score of the divergence degree.

4. The method according to claim 3, wherein
when it is determined in the abnormality determination that the monitoring target is abnormal when data of a feature amount is equal to or more than a threshold value, a value between the abnormal maximum value and the normal maximum value is recommended as the threshold value.

5. The method according to any one of claims 2 to 4, wherein
every time data of one type of a feature amount is acquired, the acquired data of one type of a feature amount is made into the histogram.

6. A program for causing a computer to execute a method, **characterized by** comprising:
performing scoring each of data of a plurality of types of feature amounts acquired respectively from a monitoring target at a normal time and an abnormal time by scoring a divergence degree of a same data at a normal time and an abnormal time in data of the plurality of types of feature amounts; and
recommending a feature amount whose assigned score satisfies a predetermined condition in the plurality of types of feature amounts as a feature amount used for abnormality determination of the monitoring target.

7. A device (1), **characterized by** comprising:
an acquisition unit (21) configured to acquire data of a plurality of types of feature amounts of a monitoring target at a normal time and an abnormal time;
a scoring unit (22) configured to perform scoring each of data of a plurality of types of feature amounts acquired respectively from the monitoring target at a normal time and an abnormal time by scoring a divergence degree of a same data at a normal time and an abnormal time in data of the plurality of types of feature amounts; and
a recommendation unit (23) configured to recommend a feature amount whose assigned score satisfies a predetermined condition in the plurality of types of feature amounts as a feature amount used for abnormality determination of the monitoring target.

8. A device (1) according to claim 7, comprising:
a display (24) configured to display a plurality of recommended feature amounts; and
a selection unit (25) configured to select one feature amount from the plurality of types of feature amounts displayed on the display (24).
